# EUROPÄISCHE PATENTSCHRIFT

(11) **EP 1 307 512 B1**
(45) Veröffentlichungstag und Bekanntmachung des Hinweises auf die Patenterteilung: **01.02.2006**
(21) Anmeldenummer: 01958018.2
(22) Anmeldetag: 25.07.2001
(51) Int. Cl.: C09B 67/22

(54) **FARBSTOFFMISCHUNG VON WASSERLÖSLICHEN FASERREAKTIVEN FARBSTOFFEN, VERFAHREN ZU IHRER HERSTELLUNG UND IHRE VERWENDUNG**
DYE MIXTURE OF WATER-SOLUBLE, FIBRE-REACTIVE DYES, METHOD FOR THEIR PRODUCTION AND THE USE THEREOF
MELANGE DE COLORANTS HYDROSOLUBLES REACTIFS AUX FIBRES, PROCEDE DE PRODUCTION ET UTILISATION

(30) Priorität: 29.07.2000 DE 10037075
(43) Veröffentlichungstag der Anmeldung: 07.05.2003
(73) Patentinhaber: DyStar Textilfarben GmbH & Co. Deutschland KG, 65926 Frankfurt am Main (DE)
(72) Erfinder: STECKELBERG, Joachim, 25541 Brunsbüttel (DE); SCHUMACHER, Christian, 65779 Kelkheim (DE)
(86) Internationale Anmeldenummer: PCT/EP2001/008595
(87) Internationale Veröffentlichungsnummer: WO 2002/010289

(56) Entgegenhaltungen:
- EP-A- 0 158 233
- EP-A- 0 668 328
- US-A- 5 512 061

## Beschreibung

Die Erfindung liegt auf dem technischen Gebiet der faserreaktiven Farbstoffe.

Es sind zahlreiche faserreaktive Farbstoffmischungen bekannt, die sich zur Erzeugung von schwarzen Färbungen auf hydroxy- und/oder carbonamidgruppenhaltigen Fasern, wie insbesondere Cellulosefasern, eignen, beispielsweise aus den U.S. Patentschriften 5,445,654 und 5,611,821, sowie der koreanischen Patentschrift 94-2560 und der japanischen Schrift Sho 58-160 362. In der EP-A 158 233 werden zahlreichen Mischungen von faserreaktiven Farbstoffen, in denen jeweils eine Farbstoffkomponente als Nuancierkomponente eingesetzt wird, beschrieben.

Diese Farbstoffmischungen besitzen jedoch gewisse anwendungstechnische Mängel, wie beispielsweise eine zu große Abhängigkeit der Farbausbeute von wechselnden Färbeparametern im Färbeprozeß, oder einen ungenügenden oder unegalen Farbaufbau auf Baumwolle, wobei sich ein guter Farbaufbau aus der Fähigkeit eines Farbstoffes ergibt, bei Anwendung erhöhter Farbstoffkonzentrationen im Färbebad die entsprechend farbstärkere Färbung zu liefern. Folge dieser Mängel können schlechte Reproduzierbarkeiten der erhältlichen Färbungen sein.

Es ist jedoch insbesondere wichtig, Färbungen mit guter Farbausbeute zu erhalten, d.h. Färbungen, deren Farbtiefe im Verhältnis zur eingesetzten Farbstoffmenge, beispielsweise aufgrund eines hohen Extinktionswerts und aufgrund eines guten färberischen Verhaltens dieses Farbstoffes, beispielsweise eines guten Ausziehvermögens und eines hohen Fixierwerts, möglichst hoch ist. Setzt man Mischungen von Farbstoffen bestimmter Farbausbeute ein, so ist es die Regel, dass sich die Farbausbeute dieser Mischungen von Farbstoffen aus der Summe der Farbausbeuten der Einzelfarbstoffe ergibt, weswegen die Farbausbeute einer Mischung von beispielsweise zwei Farbstoffen geringer sein wird als die Farbausbeute, die sich durch den Farbstoff mit der größeren Farbausbeute-Eigenschaft bei dessen Einsatz als Einzelfarbstoff, jedoch in der Gesamtmenge der beiden Einzelfarbstoffe, ergibt. Gleiches gilt auch für die Gebrauchsechtheiten wie Beispielsweise die Licht-, Wasch-, Bügel-, und Chlorechtheiten. Bei diesen Echtheiten ist überdies öfters ein negativer Mischungseffekt, ein sogenanntes catalytic fading zu beobachten, so dass in Mischungen die Echtheiten unter denjenigen der Einzelfarbstoffe liegen können.

Mit der vorliegenden Erfindung wurde nunmehr überraschenderweise gefunden, dass die Farbstärke der nachstehend beschriebenen erfindungsgemäßen Farbstoffmischungen überraschenderweise höher liegen als die Summe der Farbstärken, die die Einzelfarbstoffe der Farbstoffmischung liefern. Dieser synergistische Effekt zeigt sich zudem in einem verbesserten Aufbauverhalten der erfindungsgemäßen Mischung gegenüber demjenigen der einzelnen Farbstoffe, die in der Mischung enthalten sind, sowie in teilweise dem Durchschnitt der Einzelechtheiten überlegenen Echtheiten.

Die Erfindung betrifft somit Farbstoffmischungen, welche mindestens einen Farbstoff der allgemeinen Formel (1) und mindestens einen Farbstoff der allgemeinen Formel (2) enthalten. 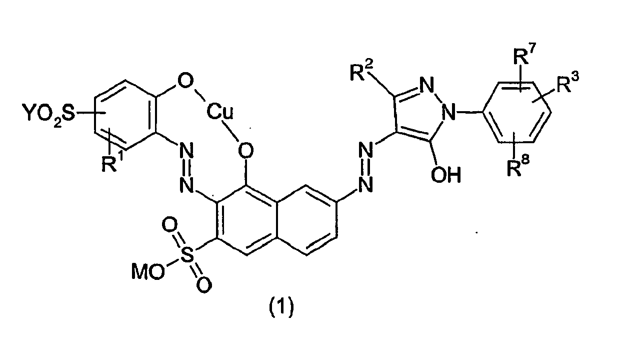 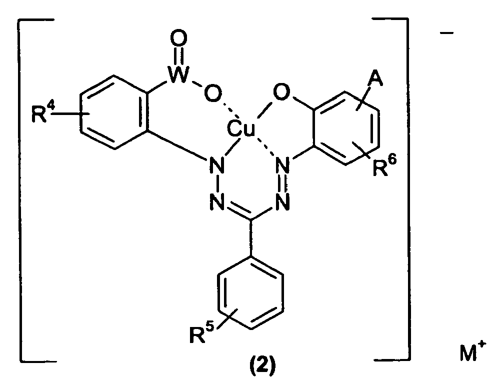
worin
- M: für Wasserstoff oder ein Alkali, ein Ammonium oder für das Äquivalent eines Erdalkali Ions steht;
- Y: Vinyl oder eine Gruppierung der Formel CH₂CH₂Z ist, worin Z eine durch Alkali Einwirkung eliminierbare Gruppierung wie z.B. Chloro, Acetyl, Phosphato, Thiosulfato und besonders bevorzugt Sulfato ist;
- R¹: Wasserstoff ist oder C₁-C₄ Alkyl, wie Methyl, Ethyl, n-Propyl, i-Propyl, n-Butyl, i-Butyl, sec-Butyl, C₁-C₄ Alkoxy, wie Methoxy, Ethoxy, Propyloxy oder Butyloxy, Sulfo, Bromo, Chloro, bevorzugt, Methyl oder Methoxy;
- R²: Wasserstoff oder C₁-C₆-Alkyl, wie Methyl, Ethyl, n-Propyl, i-Propyl, n-Butyl, i-Butyl, sec-Butyl, Pentyl oder Hexyl, Carboxy, Carboxyalkyl, beispielsweise Carboxymethyl, Carboxyethyl, bevorzugt Carboxy oder Methyl ist;
- R³: Wasserstoff, Sulfo oder SO₂Y¹ ist, wobei Y¹ eine Bedeutung von Y hat;
- R⁴: Wasserstoff oder Sulfo ist;
- R⁵: eine Bedeutung von R⁴ hat oder Methyl, Carboxyl oder SO₂Y² ist, wobei Y² eine Bedeutung von Y hat und bevorzugt für CH₂CH₂Cl steht;
- R⁶: eine Bedeutung von R⁴ hat;
- R⁷: Wasserstoff , Alkyl, Sulfo oder Chloro ist;
- R⁸: eine Bedeutung von R⁷ hat
- W: Kohlenstoff oder -SO- ist;
- A: für eine Gruppierung der allgemeinen Formel (3) steht, sowie SO₂Y³ ist, wobei Y³ eine Bedeutung von Y hat, wenn R⁵ nicht Wasserstoff bedeutet; oder aber A steht für eine Gruppierung der allgemeinen Formel (3)

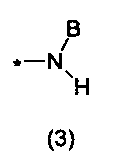

worin
- *: die Bindung zum Formazan bedeutet und
- B: für eine Gruppierung der allgemeinen Formeln (4), (5), (6) oder (7)steht. 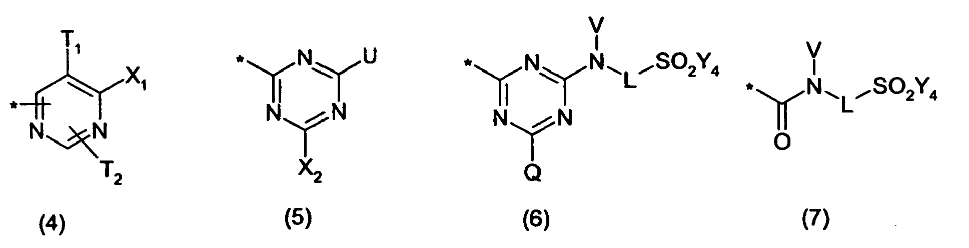
worin
- *: für die Bindung zu N in der Formel (3) steht
- Y₄: Vinyl oder eine Gruppierung der Formel CH₂CH₂Z ist, worin
Z eine durch Alkali Einwirkung eliminierbare Gruppierung wie z.B. Phosphato oder Sulfato ist;
- U: ein 5 oder 6 gliedriger N-gebundener heterocyclischer Ring, der mit einer Thio oder Oxo-Gruppe substituiert sein kann, bevorzugt ist U Morpholin, oder aber eine Gruppe der allgemeinen Formel (8) 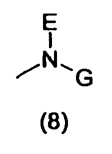
wobei
- E: Wasserstoff ist, gegebenenfalls mit einer Methoxy, Hydroxy, Sulfato, Sulfo oder Chloro Gruppe substituiertes C₁-C₄-Alkyl, gegebenenfalls mit ein oder 2 Substituenten aus der Reihe Chlor, Nitro, Acetylamino, Sulfo, Hydroxy, Carboxy, C₁-C₄-Alkanoyl, C₁-C₄-Alkoxy, C₁-C₄-Alkyl substituiertes Phenyl, bevorzugt ist E Wasserstoff, Phenyl, 4-Chlorophenyl, 3-Sulfophenyl, Methyl, 2-Hydroxyethyl, 2-Sulfoethyl, 2-Hydroxyethyl, 2-Sulfatoethyl;
- G: eine der Bedeutungen von E hat oder Cyano, bevorzugt Wasserstoff ist;
- L: Phenylen oder Naphtyl ist, welches mit bis zu zwei Substituenten aus der Reihe Chloro, Bromo, Hydroxy, C₁-C₄ -Alkoxy, insbesondere Methoxy, C₁-C₄₋Alkyl insbesondere Methyl, Ethyl, Sulfo, Cyano substituiert sein kann; oder aber L ist C₂-C₆ Alkylen, welches mit 1 bis 2 Heterogruppen, wie beispielsweise Oxo, Thio, Amino, C₁-C₄-Alkylamino unterbrochen sein kann; L ist bevorzugt Phenylen, Ethylen, Propylen, 3-Oxopentylen;
- Q: Fluor, Chlor, C₁-C₄ Alkoxy, Cyanamido, Amino, C₁-C₄-Alkylamino, Dialkylamino, Piperazin, Morpholin oder eine Gruppe der Formel (9a) oder (9b) ist, 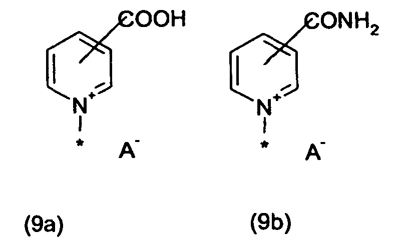
wobei A⁻ für Fluorid, Chlorid oder für das Äquivalent eines Sulfations steht;
- V: eine der Bedeutungen von E hat und bevorzugt Wasserstoff, Methyl, Phenyl oder Sulfophenyl ist;
- T¹: Wasserstoff, Fluor oder Chlor ist,
- T²: Wasserstoff, Fluor oder Chlor ist wobei für T² und T¹ nicht gleichzeitig Wasserstoff sind;
- X¹: Fluor oder Chlor ist und
- X²: eine Bedeutung von X¹ hat.

Im allgemeinen sind der Farbstoff der allgemeinen Formel (1) und der Farbstoff der allgemeinen Formel (2) in der Mischung in einem Mischungsverhältnis von 90:10 Gew.-% bis 10:90 Gew.-%, bevorzugt im Verhältnis von 80:20 Gew.-% bis 20:80 Gew.-%, enthalten. Insbesondere bevorzugt sind die beiden Farbstoffe in der erfindungsgemäßen Farbstoffmischung in einem Verhältnis von 65:35 bis 35:65 Gew.-% enthalten.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wässriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffmischungen als Farbstoffpulver mit einem Gehalt von 10 bis 80 Gew.%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 10 Gew.-%, bezogen auf das Farbstoffpulver enthalten. Sofern die erfindungsgemäßen Farbstoffmischungen in wässriger Lösung vorliegen, beträgt der Gesamtfarbstoffgehalt in diesen wässrigen Lösungen bis zu etwa 75 Gew.%, wie beispielsweise zwischen 5 und 75 Gew.-%., wobei der Elektrolytsalzgehalt in diesen wässrigen Lösungen bevorzugt unterhalb 10 Gew.-%, bezogen auf die wässrige Lösung, beträgt; die wässrigen Lösungen (Flüssigpräparationen) können die erwähnten Puffersubstanzen in der Regel in einer Menge von bis zu 10 Gew.%, bevorzugt bis zu 2 Gew.-%, enthalten.

Farbstoffe der allgemeinen Formel (1) sind bekannt und können entsprechend der Patentschriften US 5 725 641, EP-A 668328 und DE 4306432 synthetisiert werden. So kann man zum Beispiel durch gängige Diazotier- und Kupplungsreaktion die Bisazoverbindungen aufbauen und anschließend, in dem Fachmann geläufiger Weise durch Kupferung die erfindungsgemäßen Farbstoffe der Formel (1) herstellen: Ausgehend von 2-Amino-8-hydroxy-6-sulfonaphthalin (1a) 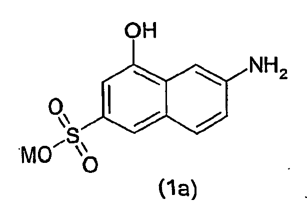
wird nach Diazotierung mit Natriumnitrit im Salzsauren und Kupplung auf eine Verbindung der Formel (1b) 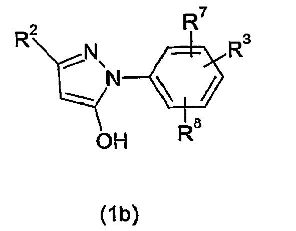
die entsprechenden Monoazoverbindung der Formel (1c) erhalten. 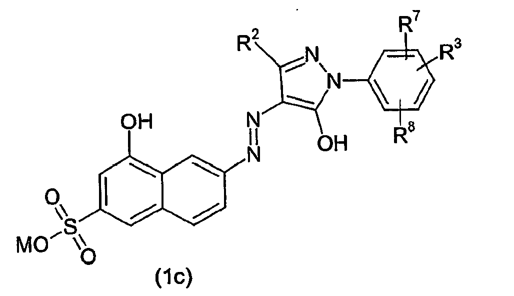
Nach Diazotierung der Anilinverbindung (1d) mit Natriumnitrit in salzsaurer Lösung 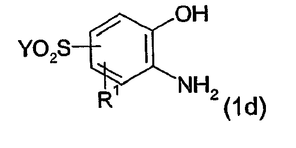
und Kupplung auf die Verbindung der Formel (1c) erhält man die Bisazoverbindung (1e) 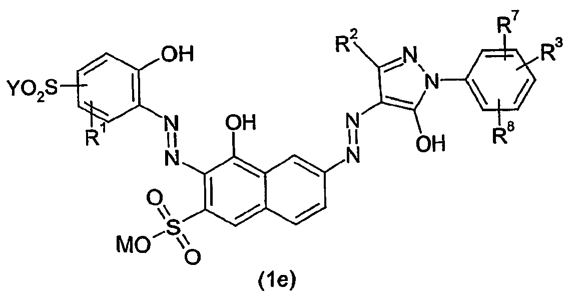
die durch Kupferung mit einem Kupfersalz bei erhöhter Temperatur und einem pH - Wert zwischen 5 und 7 in die Verbindung der Formel (1) überführt wird.

Farbstoffe der allgemeinen Formel (2) sind aus den Patentschriften EP-A 629 667, EP-A 625551, EP-A 626429, DE-A 4320632 und WO 9418381 bekannt. So kann man beispielsweise eine Verbindung der allgemeinen Formel (2a), wobei W und R⁴ die vorgenannte Bedeutung haben, im mineralsaurem Medium bei einer Temperatur von 0-10 °C durch Zugabe von Natriumnitrit diazotieren und das erhaltene Diazoniumsalz zum Hydrazin (2a) in dem Fachmann geläufiger Weise reduzieren. Als Reduktionsmittel wird bevorzugt Wasserstoff in Gegenwart eines Übergangmetall- Katalysators verwendet: 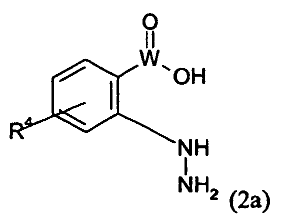
Dieses Hydrazin (2a) setzt man dann mit dem entsprechend substituierten Benzaldehyd zum Hydrazon (2b) um, wobei R⁵ die vorgenannte Bedeutung hat. 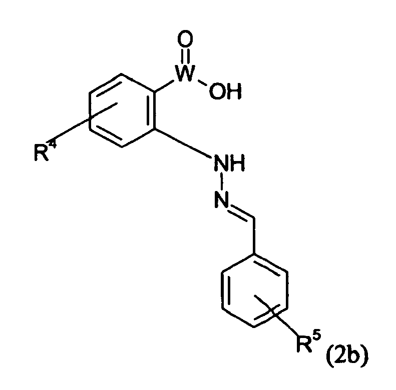
Das Hydrazon der Formel (2b) reagiert mit Diazoniumsalzen in Gegenwart von Kupfersalzen zu den entsprechenden Formazanen. So erhält man beispielsweise durch Umsetzung von (2b) mit dem Diazoniumsalz (2c') für A gleich SO₂Y³, wobei Y³ die oben angegebene Bedeutung hat, und Umsetzung von (2b) mit dem Diazoniumsalz (2c") für A gleich einer Gruppierung der allgemeinen Formel (3) in der darzustellenden Verbindung (2), in Gegenwart von Kupfer bei einem pH von 4-9 das Formazan (2d'), respektive das Formazan (2d").

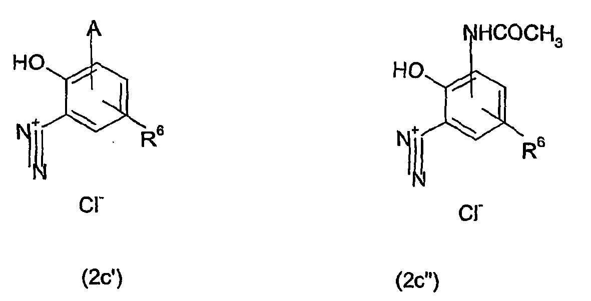

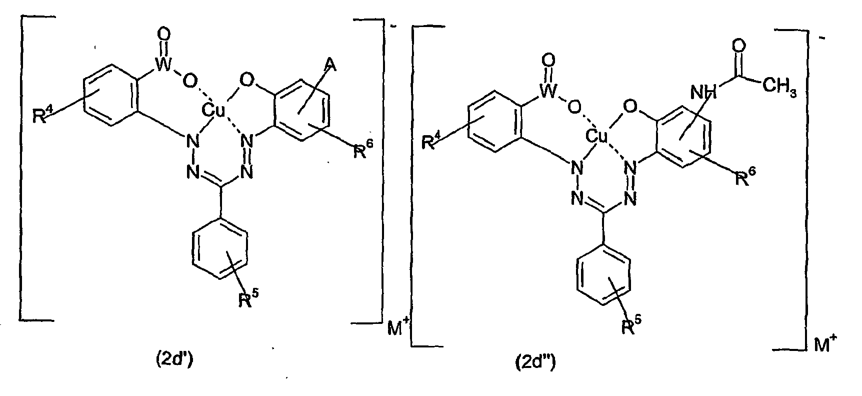

Alkalische Verseifung von (2d") bei erhöhter Temperatur ergibt das freie Amin (2e), welches mit Reaktivankern wie Bsp. Trifluortriazin, Trifluorpyrimidinen oder Trichlortriazin umgesetzt werden kann.

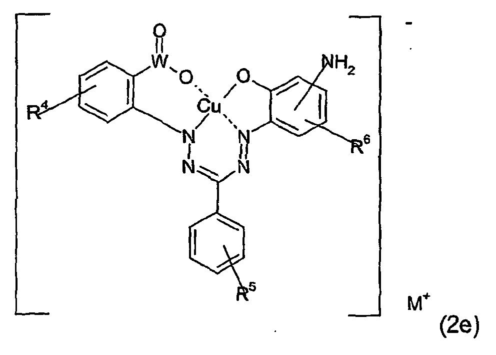

Durch eine dem Fachmann geläufige Substitutionsreaktion wird schließlich in Verbindung der Formel (2e) der Rest B eingeführt, wobei B die vorgehend genannte Bedeutung hat, und die so erhaltene Verbindung der allgemeinen Formel (2) in üblicher Weise durch Aussalzen oder Sprühtrocknung isoliert.

Die erfindungsgemäßen Farbstoffmischungen können in üblicher Weise hergestellt werden, so durch mechanisches Mischen der einzelnen in fester oder in flüssiger Form vorliegenden Farbstoffe in den erforderlichen Anteilen.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Verbindungen anfallenden Lösungen der erfindungsgemäßen Farbstoffmischungen, gegebenenfalls nach Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wässrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen der Farbstoffe beschleunigenden Neutralsalze können dem Bade gewünschten falls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Farbstoffmischungen zeichnen sich auf den Cellulosefasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Nassechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und sehr gute Nassechtheiten, wie Wasch-, Walk-, Wasser-, Seewasser-, Überfärbe- und saure sowie alkalische Schweißechtheiten, des weiteren eine gute Bügelechtheit und Reibechtheit auf.

Des weiteren können die erfindungsgemäßen Farbstoffmischungen auch für das faserreaktive Färben von Wolle Verwendung finden. Auch lässt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Coloirists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozess unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, grau bis blaustichig schwarze Färbungen.

Die nachstehenden Beispiele dienen zur Erläuterung der Erfindung. Sie lassen sich in erfindungsgemäßer Weise durch mechanische Mischung der Einzelfarbstoffe in fester oder flüssiger Form herstellen. Die Teile sind Gewichtsteile, die Prozentangaben stellen Gewichtsprozente dar, sofern nicht anders vermerkt. Die in den Beispielen formelmäßig beschriebenen Verbindungen sind zum Teil in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Die erfindungsgemäßen Farbstoffmischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheitseigenschaften und besonders guten Anschmutzverhalten insbesondere gegenüber Polyester in der Continuefärberei nach dem sogenannten Pad-Steam Verfahren.

### Beispiele:

1. (a) 23,9 Teile 2-Amino-8-hydroxy-6-sulfo-naphtalin werden in 200 Teilen Wasser durch Zugabe von Natriumbicarbonat neutral gelöst. Hierzu gibt man 6,9 Teile Natriumnitrit. Die Lösung lässt man in eine Mischung aus 100 Teilen Eis und 100 Teilen halbkonzentrierte Salzsäure eintropfen. Man rührt 1 Stunde nach und zerstört das überschüssige Nitrit mit Harnstoff.

1. (b) 28.5 Teile 1-(4-Sulfo)-phenyl-3-carboxy-pyrazol-5-on werden bei pH 6 in 100 Teilen Wasser gelöst. Hierzu tropft man das Diazoniumsalz aus (a), wobei ein pH zwischen 4-7 durch Sodazugabe gehalten wird.

1. (c) 34 Teile 2,5-Dimethoxy-4(β-sulfatoethylsulfonyl)-anilin werden werden in 200 Teilen Wasser durch Zugabe von Natriumbicarbonat neutral gelöst. Hierzu gibt man 6,9 Teile Natriumnitrit. Die Lösung lässt man in eine Mischung aus 100 Teilen Eis und 100 Teilen halbkonzentrierte Salzsäure eintropfen. Man rührt 1 Stunde nach und zerstört das überschüssige Nitrit mit Harnstoff.
   Die Diazoniumsalzlösung aus (c) wird nun zu der Reaktionslösung aus (b) zugetropft, wobei der pH-Wert zwischen 4 und 7 durch Sodazugabe gehalten wird. Man rührt 1 Stunde nach, versetzt mit 14 Teilen Kupferchlorid und erhitzt 3 Tage auf 100°C , wobei der pH-Wert durch Sodazugabe zwischen 5 und 7 gehalten wird. Der Farbstoff wird durch Zugabe von Ethanol bei Raumtemperatur ausgefällt und durch Filtration isoliert. Man erhält 110 Teile des Farbstoffes (A): 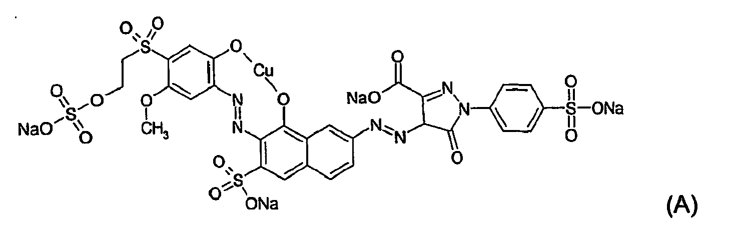
   Auf analogen Weg wurden folgende Farbstoffe entsprechend der allgemeinen Formel (1) hergestellt: 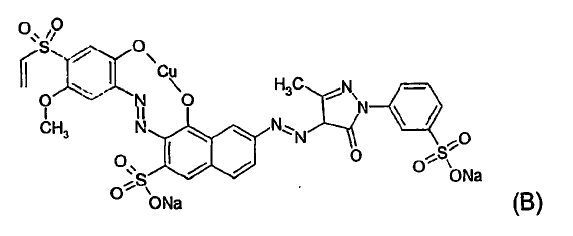 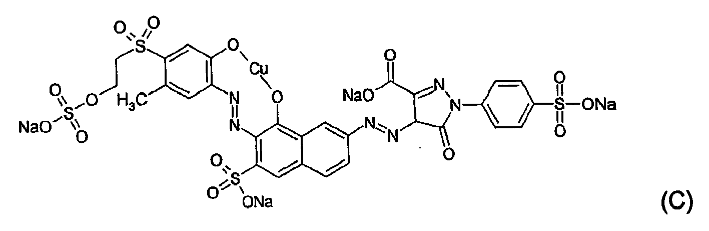 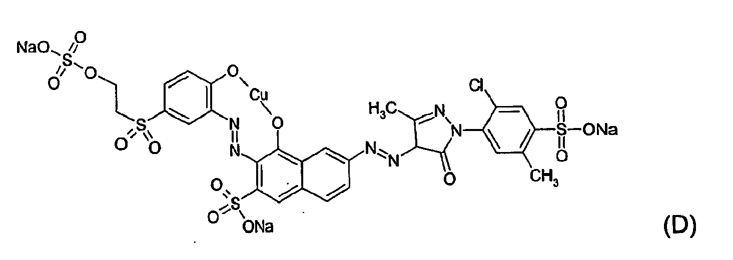 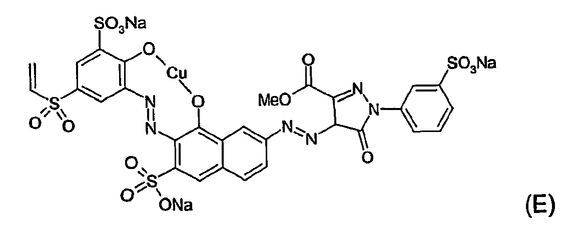 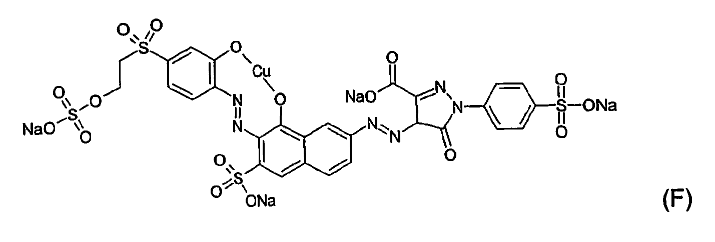 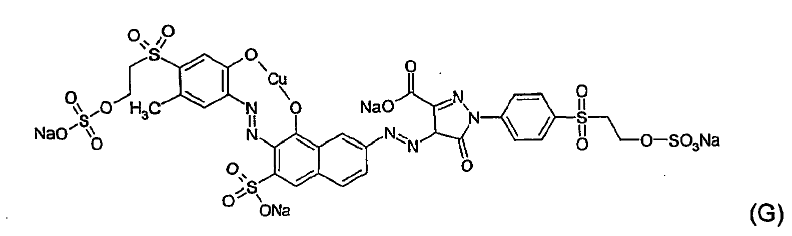
2. (a). 3-Amino-4-carboxyphenylsulfosäure wird in Salzsäure bei einer Temperatur von 0-10 °C durch Zugabe von Natriumnitrit diazotiert und das erhaltene Diazoniumsalz zum Hydrazin (a) mit Wasserstoff in Gegenwart eines Übergangsmetall-Katalysators reduziert. 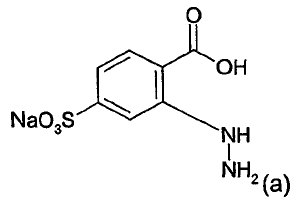
2. (b). Dieses Hydrazin setzt man dann mit dem entsprechend substituierten Benzaldehyd zum Hydrazon (b) bei 20-40°C in Wasser um. 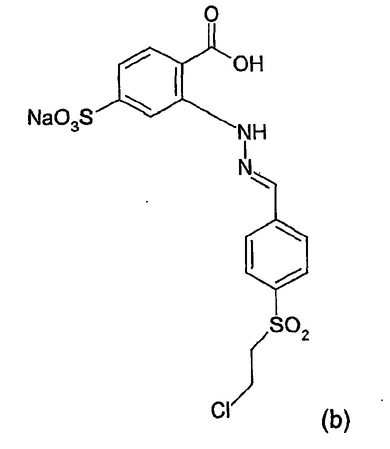
2. (c) Durch Umsetzung von (b) mit (c) in Gegenwart von Kupfer bei einem pH von 4-9 erhält man das Formazan (d)

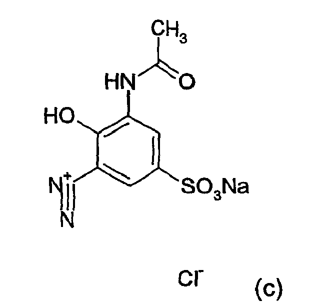

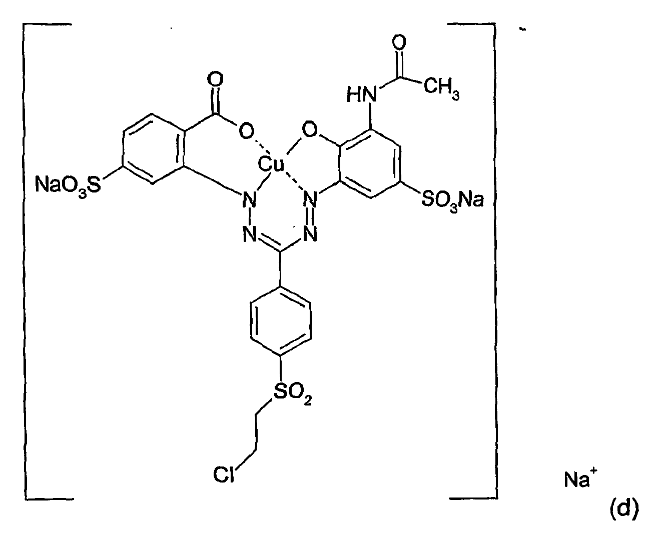

Alkalische Verseifung von (d) bei erhöhter Temperatur ergibt das freie Amin (e).

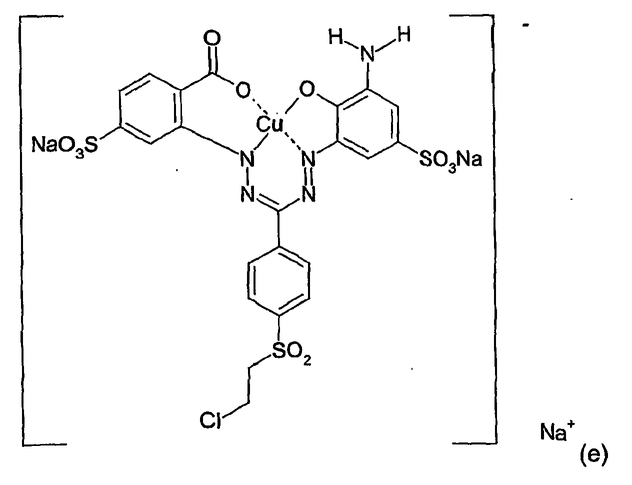

Durch Reaktion von (e) bei 0-20 °C mit Trichlortriazin erhält man die entsprechende Dichlortriazinylverbindung welche mit N-Ethyl-3-β-Vinylsulfonyl-Anilin bei Raumtemperatur zu dem erfindungsgemäßen Farbstoff (L) reagiert

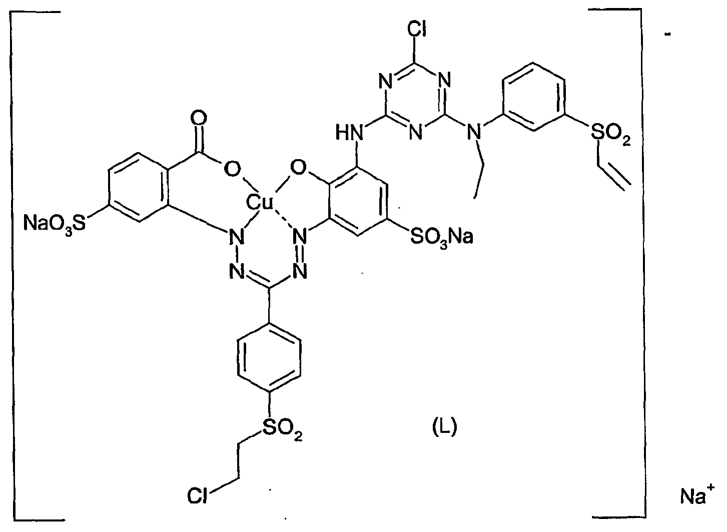

Auf analogem Weg wurden folgende Farbstoffe entsprechend der allgemeinen Formel (2) hergestellt:

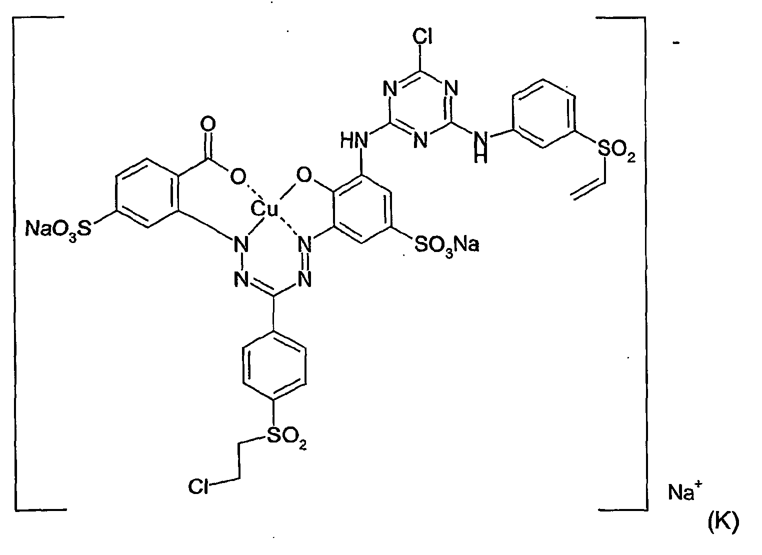

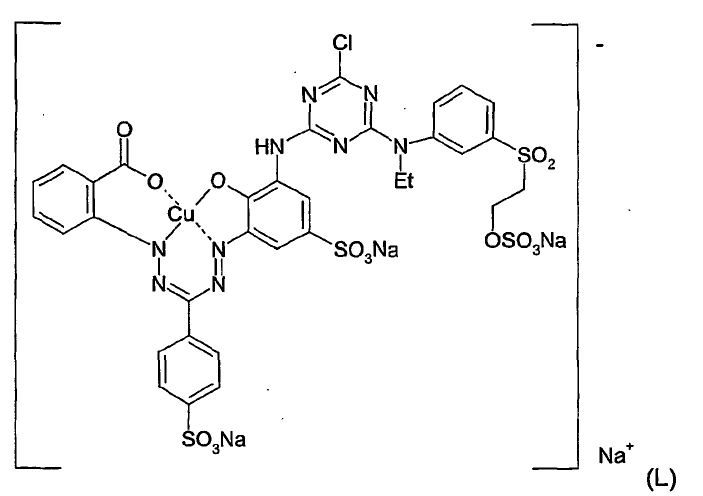

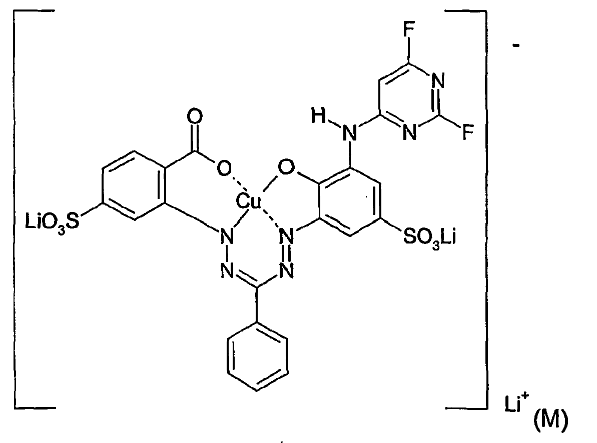

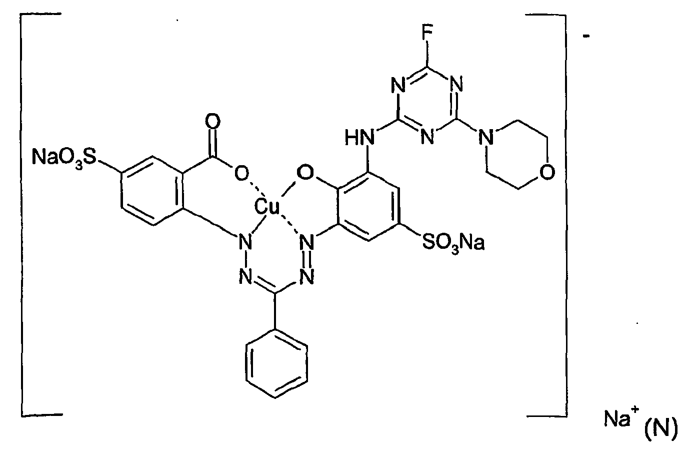

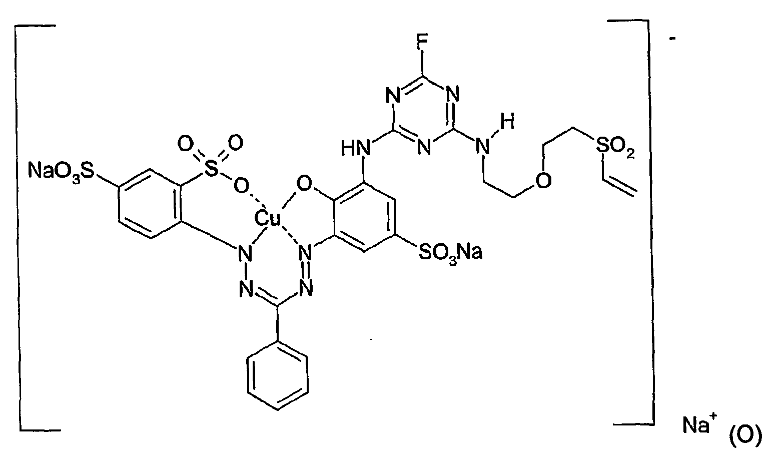

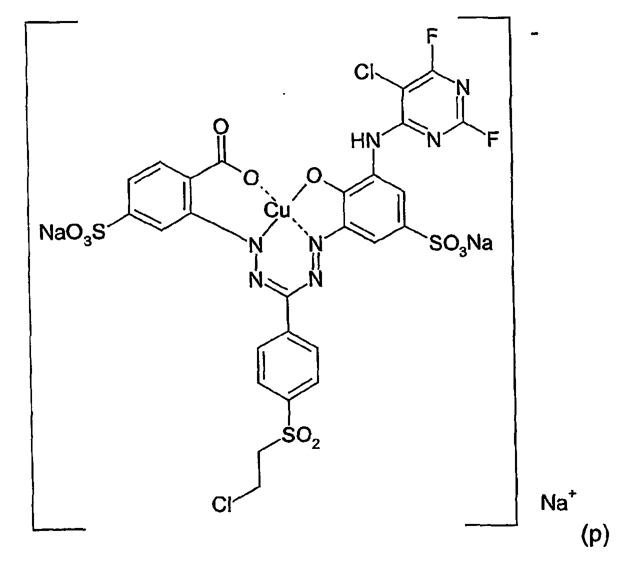

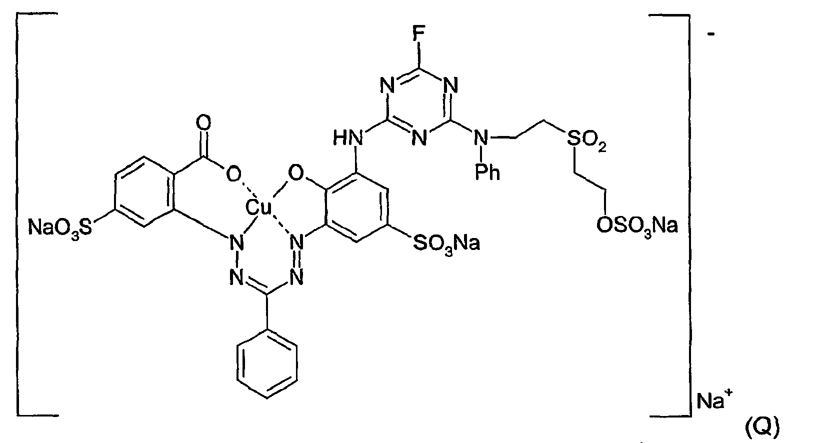

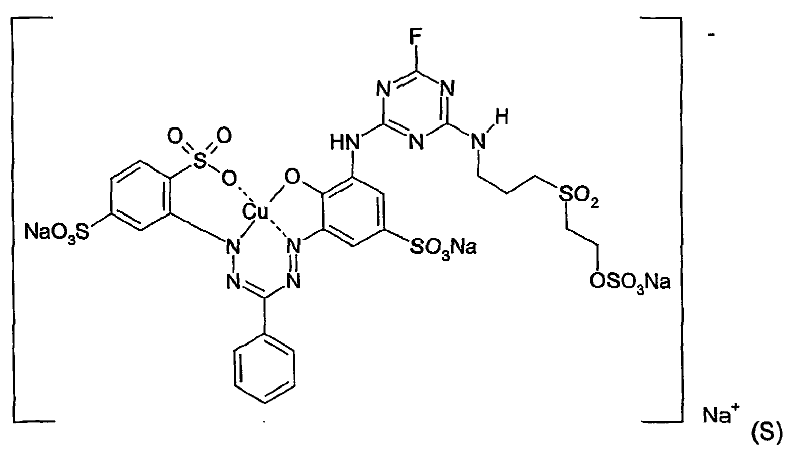

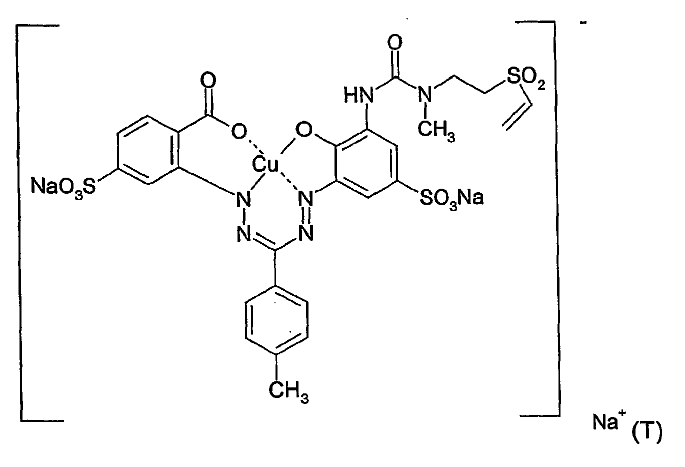

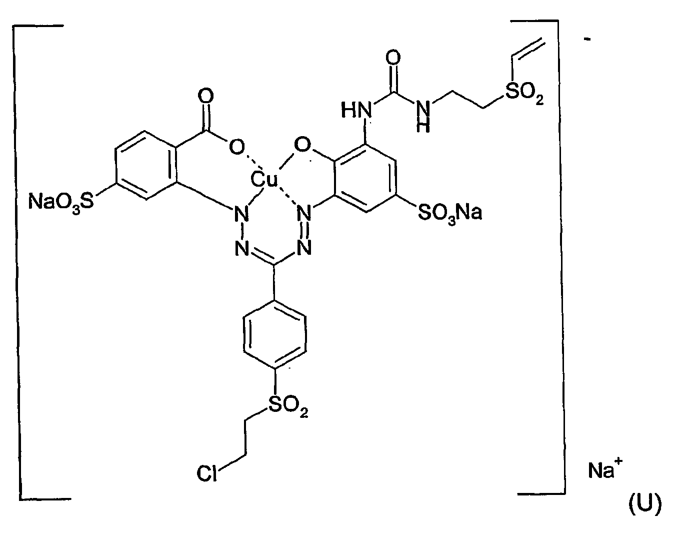

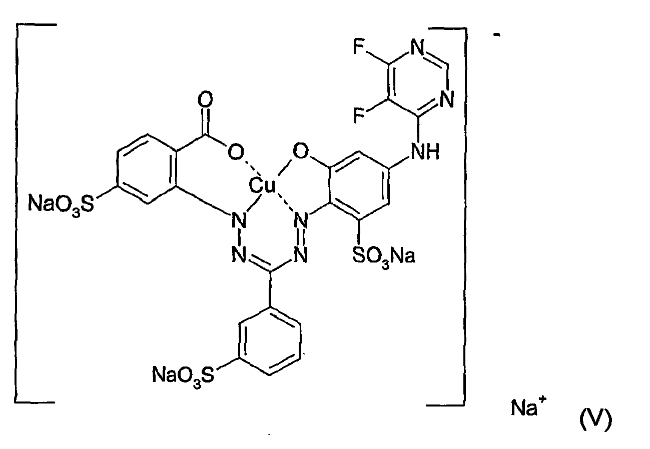

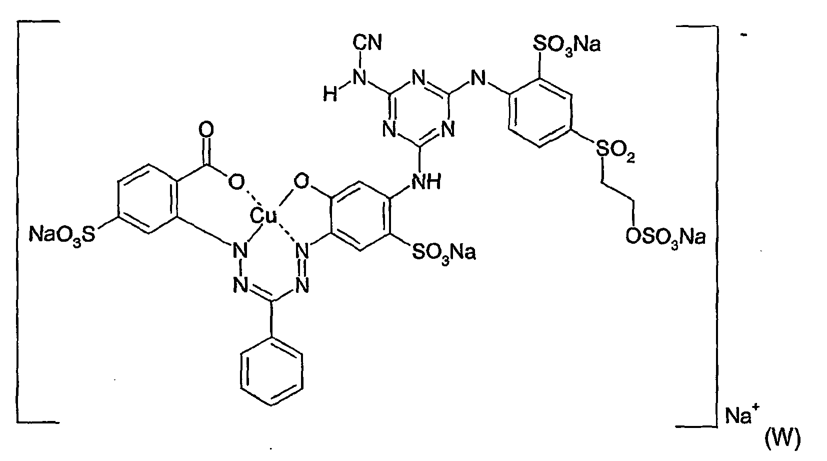

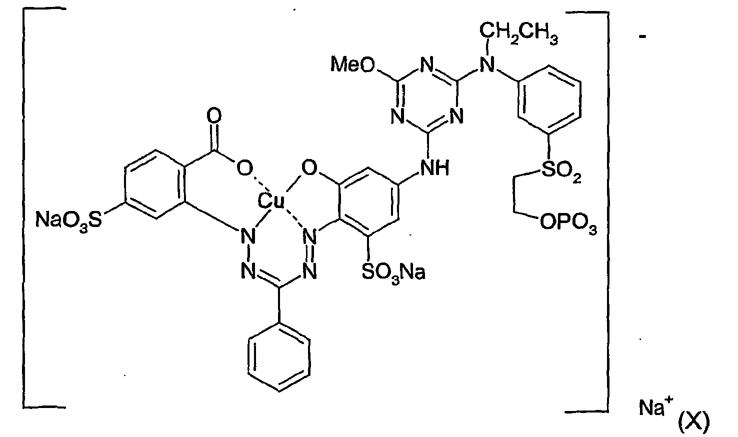

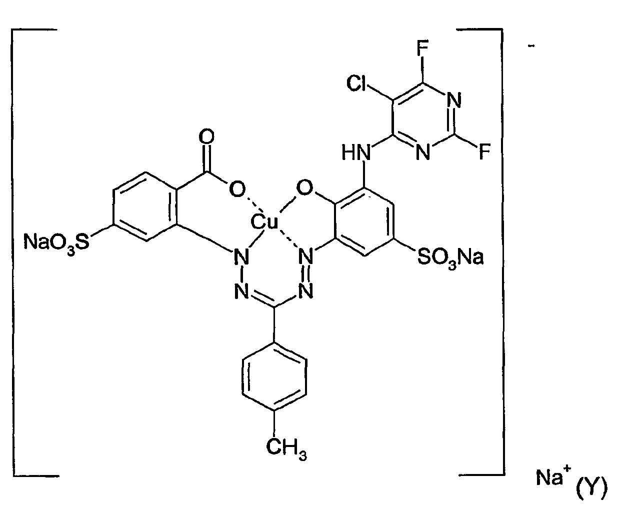

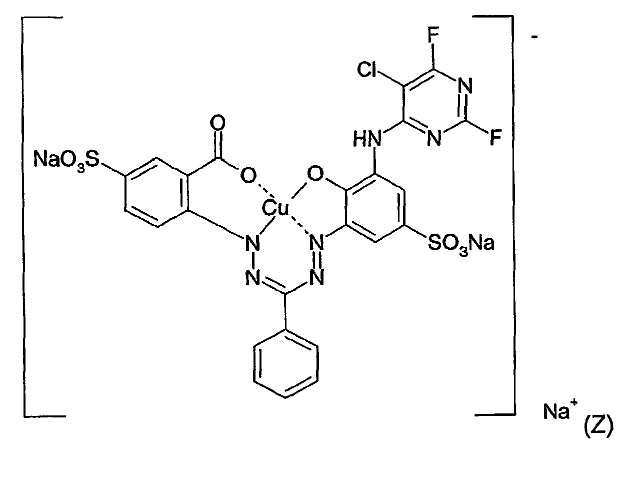

### Beispiele1-162

Durch lösen in Wasser von Farbstoffen der Formeln A-G und Kupfer Formazanen der Formeln H-Z
entsprechend den in der Tabelle angegebenen Mengenanteile, und anschließende Isolierung durch Sprühtrocknung wurden folgende erfindunmgsgemäße Mischungen erhalten:

| Beispiel | Farbstoff (1) | Farbstoff (2) | Verhältnis (1) : (2) |
|---|---|---|---|
| 1* | C | H | 1 : 1 |
| 2* | C | I | 1 : 1 |
| 3* | C | J | 1 : 1 |
| 4 | C | K | 1 : 1 |
| 5 | C | L | 1 : 1 |
| 6 | C | M | 1 : 1 |
| 7 | C | N | 1 : 1 |
| 8 | C | O | 1 : 1 |
| 9 | C | P | 1 : 1 |
| 10 | C | Q | 1 : 1 |
| 11* | C | R | 1 : 1 |
| 12 | C | S | 1 : 1 |
| 13 | C | T | 1 : 1 |
| 14 | C | U | 1 : 1 |
| 15 | C | V | 1 : 1 |
| 16 | C | X | 1 : 1 |
| 17 | C | Y | 1 : 1 |
| 18 | C | Z | 1 : 1 |
| 19* | C | H | 2 : 1 |
| 20* | C | I | 2 : 1 |
| 21* | C | J | 2 : 1 |
| 22 | C | K | 2 : 1 |
| 23 | C | L | 2 : 1 |
| 24 | C | M | 2 : 1 |
| 25 | C | N | 2 : 1 |
| 26 | C | O | 2 : 1 |
| 27 | C | P | 2 : 1 |
| 28 | C | Q | 2 : 1 |
| 29* | C | R | 2 : 1 |
| 30 | C | S | 2 : 1 |
| 31 | C | T | 2 : 1 |
| 32 | C | U | 2 : 1 |
| 33 | C | V | 2 : 1 |
| 34 | C | X | 2 : 1 |
| 35 | C | Y | 2 : 1 |
| 36 | C | Z | 2 : 1 |
| 37* | C | H | 1 : 2 |
| 38* | C | I | 1 : 2 |
| 39* | C | J | 1 : 2 |
| 40 | C | K | 1 : 2 |
| 41 | C | L | 1 : 2 |
| 42 | C | M | 1 : 2 |
| 43 | C | N | 1 : 2 |
| 44 | C | O | 1 : 2 |
| 45 | C | P | 1 : 2 |
| 46 | C | Q | 1 : 2 |
| 47* | C | R | 1 : 2 |
| 48 | C | S | 1 : 2 |
| 49 | C | T | 1 : 2 |
| 50 | C | U | 1 : 2 |
| 51 | C | V | 1 : 2 |
| 52 | C | X | 1 : 2 |
| 53 | C | Y | 1 : 2 |
| 54 | C | Z | 1 : 2 |
| 55* | B | H | 1 : 1 |
| 56* | B | I | 1 : 2 |
| 57* | B | J | 1 : 1 |
| 58 | B | K | 1 : 2 |
| 59 | B | L | 1 : 1 |
| 60 | B | M | 2 : 1 |
| 61 | B | N | 1 : 2 |
| 62 | B | O | 2 : 1 |
| 63 | B | P | 1 : 1 |
| 64 | B | Q | 2 : 1 |
| 65* | B | R | 1 : 2 |
| 66 | B | S | 1 : 1 |
| 67 | B | T | 2 : 1 |
| 68 | B | U | 1 : 1 |
| 69 | B | V | 1 : 2 |
| 70 | B | X | 1 : 2 |
| 71 | B | Y | 2 : 1 |
| 72 | B | Z | 1 : 2 |
| 73* | A | H | 1 : 1 |
| 74* | A | H | 2 : 1 |
| 75* | A | J | 1 : 1 |
| 76 | A | K | 1 : 2 |
| 77 | A | L | 1 : 1 |
| 78 | A | M | 2 : 1 |
| 79 | A | N | 1 : 2 |
| 80 | A | O | 2 : 1 |
| 81 | A | P | 1 : 1 |
| 82 | A | Q | 2 : 1 |
| 83* | A | R | 1 : 2 |
| 84 | A | S | 1 : 1 |
| 85 | A | T | 2 : 1 |
| 86 | A | U | 1 : 1 |
| 87 | A | V | 1 : 2 |
| 88 | A | X | 1 : 2 |
| 89 | A | Y | 2 : 1 |
| 90 | A | Z | 1 : 2 |
| 91* | D | H | 1 : 1 |
| 92* | D | I | 1 : 2 |
| 93* | D | J | 1 : 1 |
| 94 | D | K | 1 : 2 |
| 95 | D | L | 1 : 1 |
| 96 | D | M | 2 : 1 |
| 97 | D | N | 1 : 2 |
| 98 | D | O | 2 : 1 |
| 99 | D | P | 1 : 1 |
| 100 | D | Q | 2 : 1 |
| 101* | D | R | 1 : 2 |
| 102 | D | S | 1 : 1 |
| 103 | D | T | 2 : 1 |
| 104 | D | U | 1 : 1 |
| 105 | D | V | 1 : 2 |
| 106 | D | X | 1 : 2 |
| 107 | D | Y | 2 : 1 |
| 108 | D | Z | 1 : 2 |
| 109* | E | H | 1 : 1 |
| 110* | E | I | 1 : 2 |
| 111* | E | J | 1 : 1 |
| 112 | E | K | 1 : 2 |
| 113 | E | L | 1 : 1 |
| 114 | E | M | 2 : 1 |
| 115 | E | N | 1 : 2 |
| 116 | E | O | 2 : 1 |
| 117 | E | P | 1 : 1 |
| 118 | E | Q | 2 : 1 |
| 119* | E | R | 1 : 2 |
| 120 | E | S | 1 : 1 |
| 121 | E | T | 2 : 1 |
| 122 | E | U | 1 : 1 |
| 123 | E | V | 1 : 2 |
| 124 | E | X | 1 : 2 |
| 125 | E | Y | 2 : 1 |
| 126 | E | Z | 1 : 2 |
| 127* | F | H | 1 : 1 |
| 128* | F | I | 1 : 2 |
| 129* | F | J | 1 : 1 |
| 130 | F | K | 1 : 2 |
| 131 | F | L | 1 : 1 |
| 132 | F | M | 2 : 1 |
| 133 | F | N | 1 : 2 |
| 134 | F | O | 2 : 1 |
| 135 | F | P | 1 : 1 |
| 136 | F | Q | 2 : 1 |
| 137* | F | R | 1 : 2 |
| 138 | F | S | 1 : 1 |
| 139 | F | T | 2 : 1 |
| 140 | F | U | 1 : 1 |
| 141 | F | V | 1 : 2 |
| 142 | F | X | 1 : 2 |
| 143 | F | Y | 2 : 1 |
| 144 | F | Z | 1 : 2 |
| 145* | G | H | 1 : 1 |
| 146* | G | I | 1 : 2 |
| 147* | G | J | 1 : 1 |
| 148 | G | K | 1 : 2 |
| 149 | G | L | 1 : 1 |
| 150 | G | M | 2 : 1 |
| 151 | G | N | 1 : 2 |
| 152 | G | O | 2 : 1 |
| 153 | G | P | 1 : 1 |
| 154 | G | Q | 2 : 1 |
| 155* | G | R | 1 : 2 |
| 156 | G | S | 1 : 1 |
| 157 | G | T | 2 : 1 |
| 158 | G | U | 1 : 1 |
| 159 | G | V | 1 : 2 |
| 160 | G | X | 1 : 2 |
| 161 | G | Y | 2 : 1 |
| 162 | G | Z | 1 : 2 |

| | | | |
|---|---|---|---|
| * nicht zur Erfindung gehörend | | | |

## Patentansprüche

1. Farbstoffmischungen, Farbstoffe der allgemeinen Formel (1) und Farbstoffe der allgemeinen Formel (2) enthaltend 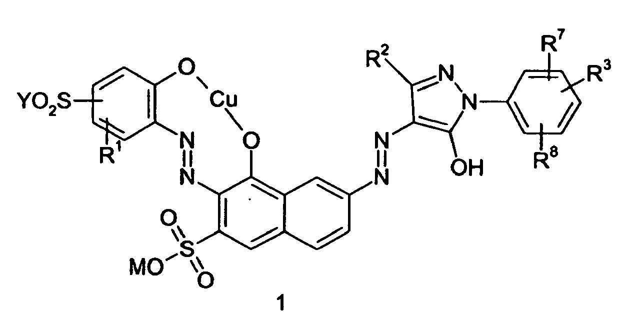 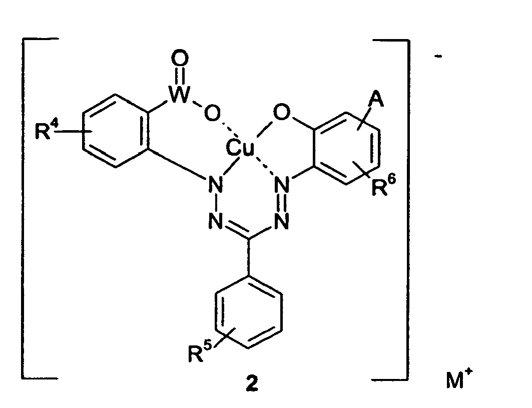
worin
M für Wasserstoff oder ein Alkali, ein Ammonium oder für das Äquivalent eines Erdalkali Ions steht;
Y Vinyl oder eine Gruppierung der Formel CH₂CH₂Z ist, worin
Z eine durch Alkali Einwirkung eliminierbare Gruppierung wie z.B. Chloro, Acetyl, Phosphato, Thiosulfato ist;
R¹ Wasserstoff oder C₁-C₄ Alkyl, wie Methyl, Ethyl, n-Propyl, i-Propyl, n-Butyl, i-Butyl, sec-Butyl, C₁-C₄ Alkoxy, wie Methoxy, Ethoxy, Propyloxy oder Butyloxy, Sulfo, Bromo, Chloro ist;
R² Wasserstoff oder C₁-C₆-Alkyl, wie Methyl, Ethyl, n-Propyl, i-Propyl, n-Butyl, i-Butyl, sec-Butyl, Pentyl oder Hexyl, Carboxy, Carboxyalkyl, beispielsweise Carboxymethyl oder Carboxyethyl;
R³ Wasserstoff , Sulfo oder SO₂Y¹ ist, wobei Y¹ eine Bedeutung von Y hat;
R⁴ Wasserstoff oder Sulfo ist;
R⁵ eine Bedeutung von R⁴ hat oder Methyl, Carboxyl oder SO₂Y² ist, wobei Y² eine Bedeutung von Y hat;
R⁶ eine Bedeutung von R⁴ hat;
R⁷ Wasserstoff, Alkyl, Sulfo oder Chloro ist;
R⁸ eine Bedeutung von R⁷ hat;
W Kohlenstoff oder -SO- ist;
A für eine Gruppierung der allgemeinen Formel (3) 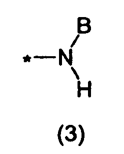
steht, worin
* die Bindung zum Formazan bedeutet und
B für eine Gruppierung der allgemeinen Formeln (4), (5), (6) oder (7) steht 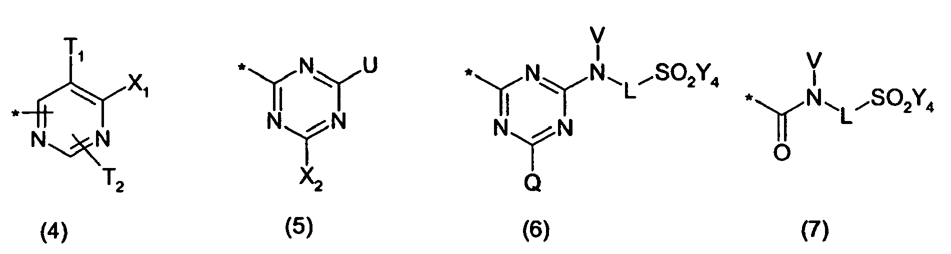
worin
* für die Bindung zu N in der Formel (3) steht
Y₄ Vinyl oder eine Gruppierung der Formel CH₂CH₂Z ist, worin Z eine durch Alkali Einwirkung eliminierbare Gruppierung wie z.B. Phosphato oder Sulfato ist ;
U ein 5- oder 6- gliedriger N-gebundener heterocyclischer Ring ist, der mit einer Thio oder Oxo-Gruppe substituiert sein kann, oder aber für eine Gruppe der allgemeinen Formel (8) steht 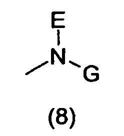
wobei
E Wasserstoff ist, gegebenenfalls mit einer Methoxy, Hydroxy, Sulfato, Sulfo oder Chloro Gruppe substituiertes C₁-C₄-Alkyl, gegebenenfalls mit ein oder 2 Substituenten aus der Reihe Chlor, Nitro, Acetylamino, Sulfo, Hydroxy, Carboxy, C₁-C₄-Alkanoyl, C₁-C₄-Alkoxy, C₁-C₄-Alkyl substituiertes Phenyl,
G eine der Bedeutungen von E hat oder Cyano ist;
L Phenylen oder Naphtyl ist, welches mit bis zu zwei Substituenten aus der Reihe Chloro, Bromo, Hydroxy, C₁-C₄ -Alkoxy, insbesondere Methoxy, C₁-C₄₋Alkyl insbesondere Methyl, Ethyl, Sulfo, Cyano substituiert sein kann oder aber List C₂-C₆ Alkylen, welches mit 1 bis 2 Heterogruppen, wie beispielsweise Oxo, Thio, Amino, C₁-C₄-Alkylamino unterbrochen sein kann;
Q Fluor, Chlor, C₁-C₄ Alkoxy, Cyanamido, Amino, C₁-C₄-Alkylamino, Dialkylamino, Piperazin oder Morpholin, oder eine Gruppe der Formel (9a) oder (9b) ist 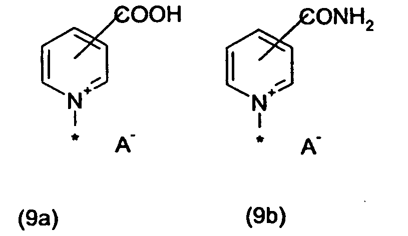
wobei A⁻ für Fluorid, Chlorid oder für das Äquivalent eines Sulfations steht;
V eine der Bedeutungen von E hat;
T¹ Wasserstoff, Fluor oder Chlor ist;
T² Wasserstoff, Fluor oder Chlor ist wobei T¹ und T² nicht beide Wasserstoff sind;
X¹ Fluor oder Chlor ist und
X² eine Bedeutung von X¹ hat.

2. Farbstoffmischungen, die Farbstoffe der allgemeinen Formel (1) und Farbstoffe der allgemeinen Formel (2) enthaltend 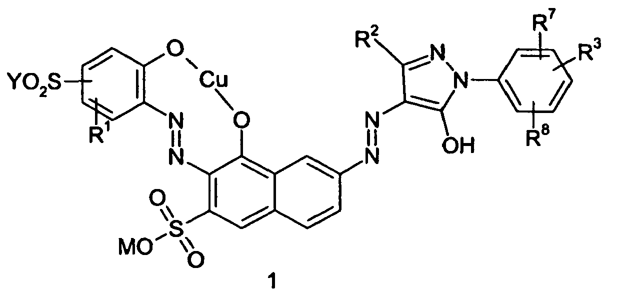 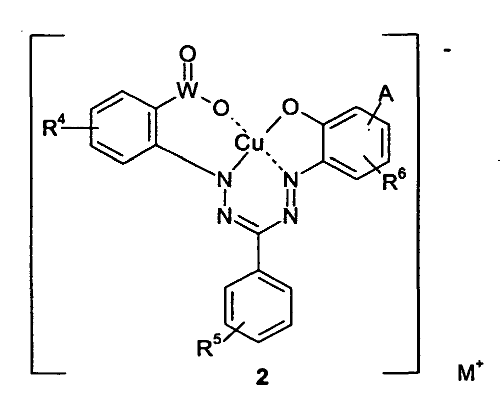
worin
M für Wasserstoff oder ein Alkali, ein Ammonium oder für das Äquivalent eines Erdalkali Ions steht;
Y Vinyl oder eine Gruppierung der Formel CH₂CH₂Z ist, worin
Z eine durch Alkali Einwirkung eliminierbare Gruppierung wie z.B. Chloro, Acetyl, Phosphato, Thiosulfato ist;
R¹ Wasserstoff oder C₁-C₄ Alkyl, wie Methyl, Ethyl, n-Propyl, i-Propyl, n-Butyl, i-Butyl, sec-Butyl, C₁-C₄ Alkoxy, wie Methoxy, Ethoxy, Propyloxy oder Butyloxy, Sulfo, Bromo, Chloro ist;
R² Wasserstoff oder C₁-C₆-Alkyl, wie Methyl, Ethyl, n-Propyl, i-Propyl, n-Butyl, i-Butyl, sec-Butyl, Pentyl oder Hexyl, Carboxy, Carboxyalkyl, beispielsweise Carboxymethyl oder Carboxyethyl;
R³ Wasserstoff , Sulfo oder SO₂Y¹ ist, wobei Y¹ eine Bedeutung von Y hat;
R⁴ Wasserstoff oder Sulfo ist;
R⁵ Sulfo, Methyl, Carboxyl oder SO₂Y² ist, wobei Y² eine Bedeutung von Y hat;
R⁶ eine Bedeutung von R⁴ hat;
R⁷ Wasserstoff, Alkyl, Sulfo oder Chloro ist;
R⁸ eine Bedeutung von R⁷ hat;
W Kohlenstoff oder -SO- ist;
A SO₂Y³ ist, wobei Y³ eine Bedeutung von Y hat, oder aber A für eine Gruppierung der allgemeinen Formel (3) 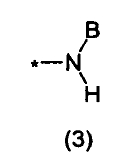
steht, worin
* die Bindung zum Formazan bedeutet und
B für eine Gruppierung der allgemeinen Formeln (4), (5), (6) oder (7) steht 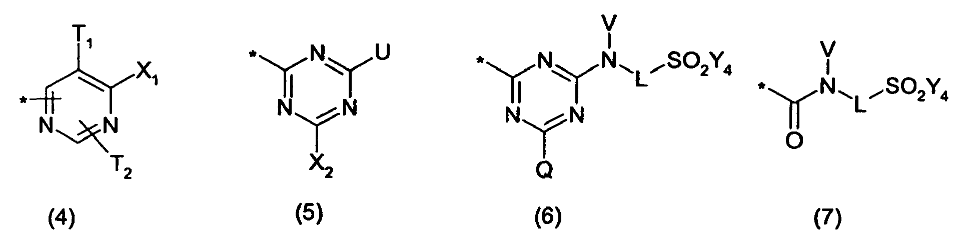
worin
* für die Bindung zu N in der Formel (3) steht
Y ₄ Vinyl oder eine Gruppierung der Formel CH₂CH₂Z ist, worin Z eine durch Alkali Einwirkung eliminierbare Gruppierung wie z.B. Phosphato oder Sulfato ist ;
U ein 5- oder 6- gliedriger N-gebundener heterocyclischer Ring ist, der mit einer Thio oder Oxo-Gruppe substituiert sein kann, oder aber für eine Gruppe der allgemeinen Formel (8) steht 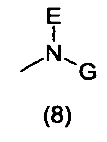
wobei
E Wasserstoff ist, gegebenenfalls mit einer Methoxy, Hydroxy, Sulfato, Sulfo oder Chloro Gruppe substituiertes C₁-C₄-Alkyl, gegebenenfalls mit ein oder 2 Substituenten aus der Reihe Chlor, Nitro, Acetylamino, Sulfo, Hydroxy, Carboxy, C₁-C₄-Alkanoyl, C₁-C₄-Alkoxy, C₁-C₄-Alkyl substituiertes Phenyl,
G eine der Bedeutungen von E hat oder Cyano ist;
L Phenylen oder Naphtyl ist, welches mit bis zu zwei Substituenten aus der Reihe Chloro, Bromo, Hydroxy, C₁-C₄ -Alkoxy, insbesondere Methoxy, C₁-C₄₋Alkyl insbesondere Methyl, Ethyl, Sulfo, Cyano substituiert sein kann oder aber L ist C₂-C₆ Alkylen, welches mit 1 bis 2 Heterogruppen, wie beispielsweise Oxo, Thio, Amino, C₁-C₄-Alkylamino unterbrochen sein kann;
Q Fluor, Chlor, C₁-C₄ Alkoxy, Cyanamido, Amino, C₁-C₄-Alkylamino, Dialkylamino, Piperazin oder Morpholin, oder eine Gruppe der Formel (9a) oder (9b) ist 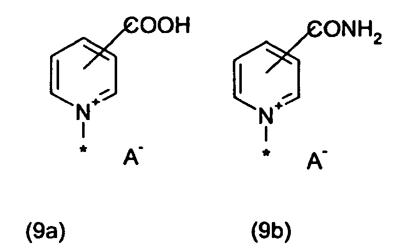
wobei A⁻ für Fluorid, Chlorid oder für das Äquivalent eines Sulfations steht;
V eine der Bedeutungen von E hat;
T¹ Wasserstoff, Fluor oder Chlor ist;
T² Wasserstoff, Fluor oder Chlor ist wobei T¹ und T² nicht beide Wasserstoff sind;
X¹ Fluor oder Chlor ist und
X² eine Bedeutung von X¹ hat.

3. Farbstoffmischung nach Anspruch 1 oder 2, enthaltend einen oder mehrere Azofarbstoffe entsprechend der allgemeinen Formel (1) und einen oder mehrere Formazanfarbstoffe entsprechend der allgemeinen Formel (2) im Mischungsverhältnis von 90:10 Gew.% bis 10:90 Gew.-%.

4. Farbstoffmischung nach Anspruch 1 oder 2, enthaltend einen oder mehrere Azofarbstoffe entsprechend der allgemeinen Formel (1) und einen oder mehrere Farbstoffe entsprechend der allgemeinen Formel (2) im Mischungsverhältnis von 70:30 Gew.-% bis 30:70 Gew.-%.

5. Verwendung einer Farbstoffmischung nach mindestens einem der Ansprüche 1 bis 5 zum Färben oder Bedrucken von hydroxy- und/oder carbonamidgruppenhaltigem Material, vorzugsweise Fasermaterial.

6. Verfahren zur Herstellung einer Farbstoffmischung nach einem oder mehreren der Ansprüche 1 bis 4 durch mechanisches Mischen der einzelnen in fester oder in flüssiger Form vorliegenden Farbstoffe der Formel (1) und (2) in den erforderlichen Anteilen.

7. Verfahren zum Färben oder Bedrucken von hydroxy- und/oder carbonamidgruppenhaltigem Material, vorzugsweise Fasermaterial, bei welchem man einen oder mehrere Farbstoffe in gelöster Form auf das Material aufbringt und den oder die Farbstoffe auf dem Material mittels Wärme oder mit Hilfe eines alkalisch wirkenden Mittels oder mittels beider Maßnahmen fixiert, **dadurch gekennzeichnet, dass** man als Farbstoffe eine Farbstoffmischung von mindestens einem der Ansprüche 1 bis 4 einsetzt

## Claims

1. Dye mixtures which include dyes of the general formula (1) and dyes of the general formula (2) 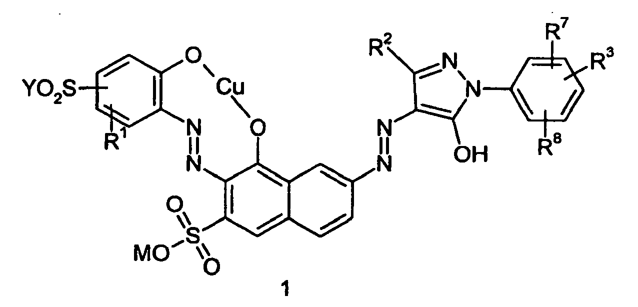 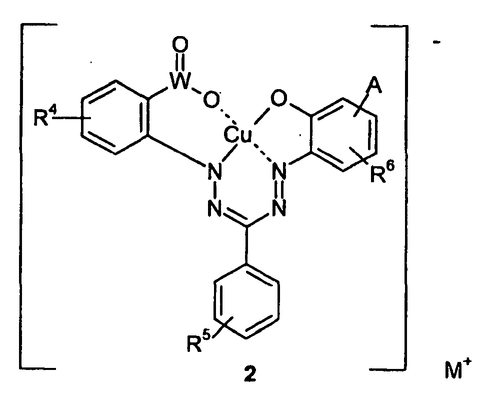
where
M is hydrogen or an alkali metal, an ammonium or the equivalent of an alkaline earth metal ion;
Y is vinyl or is a moiety of the formula CH₂CH₂Z, where
Z is an alkali-eliminable moiety such as for example chloro, acetyl, phosphato, thiosulfato;
R¹ is hydrogen or C₁-C₄ alkyl, such as methyl, ethyl, n-propyl, i-propyl, n-butyl, i-butyl, sec-butyl, C₁-C₄ alkoxy, such as methoxy, ethoxy, propyloxy or butyloxy, sulfo, bromo, chloro;
R² is hydrogen or C₁-C₆-alkyl, such as methyl, ethyl, n-propyl, i-propyl, n-butyl, i-butyl, sec-butyl, pentyl or hexyl, carboxyl, carboxyalkyl, for example carboxymethyl or carboxyethyl;
R³ is hydrogen, sulfo or SO₂Y¹, where Y¹ has one meaning of Y;
R⁴ is hydrogen or sulfo;
R⁵ has one meaning of R⁴ or is methyl, carboxyl or SO₂Y², where Y² has one meaning of Y;
R⁶ has one meaning of R⁴;
R⁷ is hydrogen, alkyl, sulfo or chloro;
R⁸ has one meaning of R⁷;
W is a carbon or -SO-;
A is a moiety of the general formula (3) 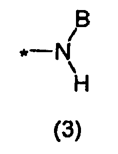
where
* denotes the bond to formazan and
B is a moiety of the general formulae (4), (5), (6) or (7) 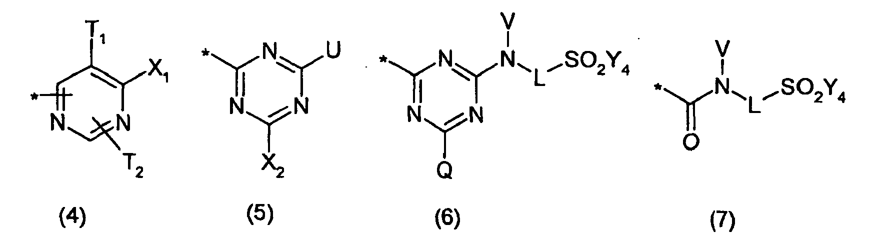
where
* is the bond to N in the formula (3)
Y₄ is vinyl or is a moiety of the formula CH₂CH₃Z, where Z is an alkali-eliminable moiety such as for example phosphato or sulfato;
U is a 5- or 6-membered N-attached heterocyclic ring which may be substituted by a thio or oxo group, or else a group of the general formula (8) 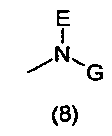
where
E is hydrogen, unsubstituted or methoxy-, hydroxyl-, sulfato-, sulfo- or chloro-substituted C₁-C₄-alkyl or is phenyl which may be substituted by one or 2 substituents selected from the group consisting of chlorine, nitro, acetylamino, sulfo, hydroxyl, carboxyl, C₁-C₄-alkanoyl, C₁-C₄-alkoxy and C₁-C₄-alkyl;
G has one of the meanings of E or is cyano;
L is phenylene or naphthyl which may each be substituted by up to two substituents selected from the group consisting of chloro, bromo, hydroxyl, C₁-C₄-alkoxy, especially methoxy, C₁-C₄-alkyl especially methyl, ethyl, sulfo, cyano; or L is C₂-C₆-alkylene, which may be interrupted by 1 to 2 hetero groups, such as for example oxo, thio, amino, C₁-C₄-alkylamino;
Q is fluorine, chlorine, C₁-C₄ alkoxy, cyanamido, amino, C₁-C₄-alkylamino, dialkylamino, piperazine or morpholine or a group of the formula (9a) or (9b) 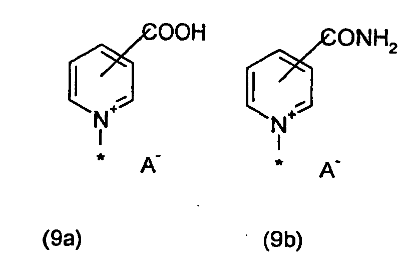
where A⁻ is fluoride, chloride or the equivalent of a sulfate ion;
V has one of the meanings of E;
T¹ is hydrogen, fluorine or chlorine;
T² is hydrogen, fluorine or chlorine, subject to the proviso that T¹ and T² are not both hydrogen;
X¹ is fluorine or chlorine; and
X² has one meaning of X¹.

2. Dye mixtures which include dyes of the general formula (1) and dyes of the general formula (2) 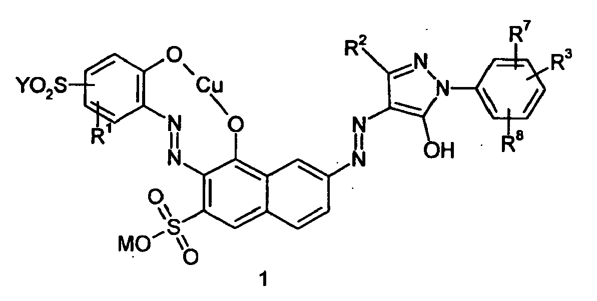 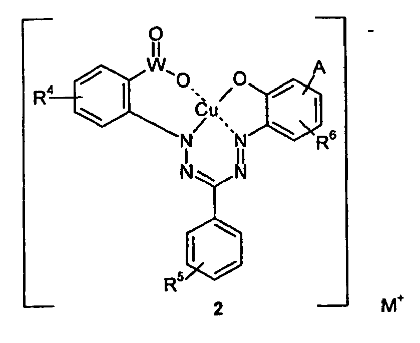
where
M is hydrogen or an alkali metal, an ammonium or the equivalent of an alkaline earth metal ion;
Y is vinyl or is a moiety of the formula CH₂CH₂Z, where
Z is an alkali-eliminable moiety such as for example chloro, acetyl, phosphato, thiosulfato;
R¹ is hydrogen or C₁-C₄ alkyl, such as methyl, ethyl, n-propyl, i-propyl, n-butyl, i-butyl, sec-butyl, C₁-C₄ alkoxy, such as methoxy, ethoxy, propyloxy or butyloxy, sulfo, bromo, chloro;
R² is hydrogen or C₁-C₆-alkyl, such as methyl, ethyl, n-propyl, i-propyl, n-butyl, i-butyl, sec-butyl, pentyl or hexyl, carboxyl, carboxyalkyl, for example carboxymethyl or carboxyethyl;
R³ is hydrogen, sulfo or SO₂Y¹, where Y¹ has one meaning of Y;
R⁴ is hydrogen or sulfo;
R⁵ is sulfo, methyl, carboxyl or SO₂Y², where Y² has one meaning of Y;
R⁶ has one meaning of R⁴;
R⁷ is hydrogen, alkyl, sulfo or chloro;
R⁸ has one meaning of R⁷ ;
W is a carbon or -SO-;
A is SO₂Y³, where Y³ has one meaning of Y, or else A is a moiety of the general formula (3) 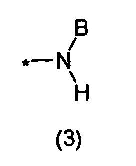
where
* denotes the bond to formazan and
B is a moiety of the general formulae (4), (5), (6) or (7) 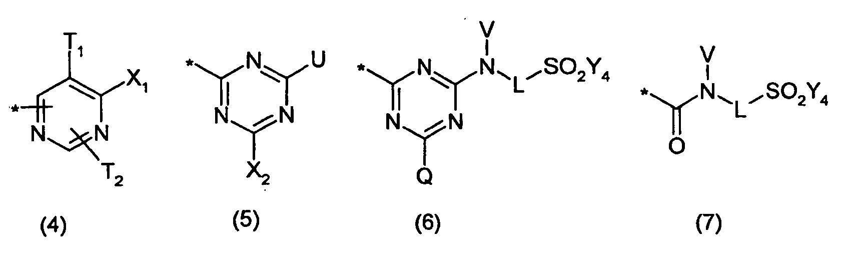
where
* is the bond to N in the formula (3)
Y₄ is vinyl or is a moiety of the formula CH₂CH₂Z, where Z is an alkali-eliminable moiety such as for example phosphato or sulfato;
U is a 5- or 6-membered N-attached heterocyclic ring which may be substituted by a thio or oxo group, or else a group of the general formula (8) 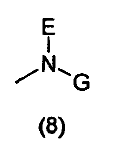
where
E is hydrogen, unsubstituted or methoxy-, hydroxyl-, sulfato-, sulfo- or chloro-substituted C₁-C₄-alkyl or is phenyl which may be substituted by one or 2 substituents selected from the group consisting of chlorine, nitro, acetylamino, sulfo, hydroxyl, carboxyl, C₁-C₄-alkanoyl, C₁-C₄-alkoxy and C₁-C₄-alkyl;
G has one of the meanings of E or is cyano;
L is phenylene or naphthyl which may each be substituted by up to two substituents selected from the group consisting of chloro, bromo, hydroxyl, C₁-C₄-alkoxy, especially methoxy, C₁-C₄-alkyl especially methyl, ethyl, sulfo, cyano; or L is C₂-C₆-alkylene, which may be interrupted by 1 to 2 hetero groups, such as for example oxo, thio, amino, C₁-C₄-alkylamino;
Q is fluorine, chlorine, C₁-C₄ alkoxy, cyanamido, amino, C₁-C₄-alkylamino, dialkylamino, piperazine or morpholine or a group of the formula (9a) or (9b) 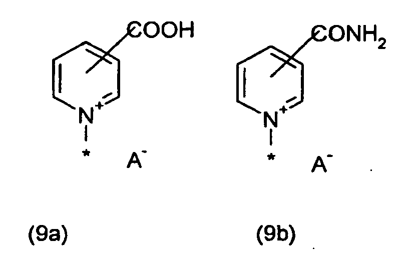
where A⁻ is fluoride, chloride or the equivalent of a sulfate ion;
V has one of the meanings of E;
T¹ is hydrogen, fluorine or chlorine;
T² is hydrogen, fluorine or chlorine, subject to the proviso that T¹ and T² are not both hydrogen;
X¹ is fluorine or chlorine; and
X² has one meaning of X¹.

3. A dye mixture as claimed in claim 1 or 2, including one or more azo dyes conforming to the general formula (1) and one or more formazan dyes conforming to the general formula (2) in a mixing ratio of 90:10% by weight to 10:90% by weight.

4. A dye mixture as claimed in claim 1 or 2, including one or more azo dyes conforming to the general formula (1) and one or more dyes conforming to the general formula (2) in a mixing ratio of 70:30% by weight to 30:70% by weight.

5. The use of a dye mixture as claimed in at least one of claims 1 to 4 for dyeing or printing hydroxyl- and/or carboxamido-containing material, preferably fiber material.

6. The process for preparing a dye mixture as claimed in one or more of claims 1 to 4 by mechanically mixing the individual dyes of the formula (1) and (2), which are present in solid or in liquid form, in the requisite proportions.

7. A process for dyeing or printing hydroxyl- and/or carboxamido-containing material, preferably fiber material, by applying one or more dyes in dissolved form to the material and fixing the dye or dyes on the material by means of heat or with the aid of an alkaline agent or by means of both measures, which comprises using a dye mixture of at least one of claims 1 to 4 as dyes.

## Revendications

1. Mélanges de colorants qui contiennent des colorants de formule générale (1) et des colorants de formule générale (2): 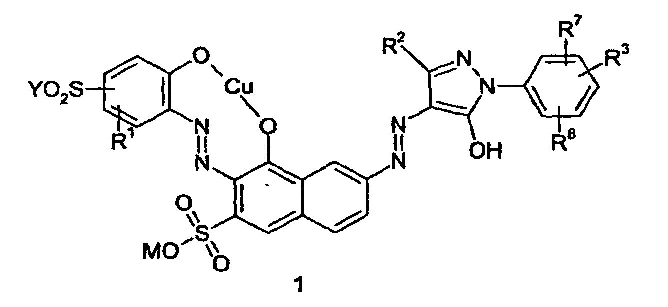 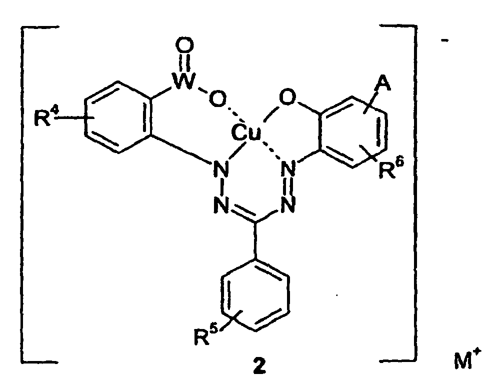
dans lesquelles
M représente l'hydrogène, un métal alcalin, un groupe ammonium ou un équivalent d'un ion de métal alcalinoterreux,
Y représente un vinyle ou un groupe de formule CH₂CH₂Z dans laquelle
Z représente un groupe qui peut être éliminé par l'action d'un métal alcalin, par exemple le chlore ou un groupe acétyle, phosphate ou thiosulfate,
R¹ représente l'hydrogène ou un alkyle en C₁ à C₄ tel que le méthyle, l'éthyle, le n-propyle, l'i-propyle, le n-butyle, l'i-butyle, le sec.-butyle, un alcoxy en C₁ à C₄ tel que le méthoxy, l'éthoxy, le propyloxy ou le butyloxy ainsi qu'un sulfo, le brome ou le chlore,
R² représente l'hydrogène ou un alkyle en C₁ à C₆ tel que le méthyle, l'éthyle, le n-propyle, l'i-propyle, le n-butyle, l'i-butyle, le sec.-butyle, le pentyle ou l'hexyle, un groupe carboxy ou carboxyalkyle, par exemple le carboxyméthyle ou le carboxyéthyle,
R³ représente l'hydrogène, un sulfo ou SO₂Y¹, Y¹ ayant la même signification que Y,
R⁴ représente l'hydrogène ou un sulfo,
R⁵ a la même signification que R⁴ ou représente un méthyle, un carboxyle ou SO₂Y², Y² ayant la même signification que Y,
R⁶ a la même signification que R⁴,
R⁷ représente l'hydrogène, un alkyle, un sulfo ou le chlore,
R⁸ a la même signification que R⁷,
W représente un carbone ou -SO- et
A représente un groupe de formule générale (3) 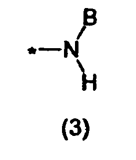
dans laquelle
* représente la liaison avec le formazan et
B représente un groupe de formule (4), (5), (6) ou (7), 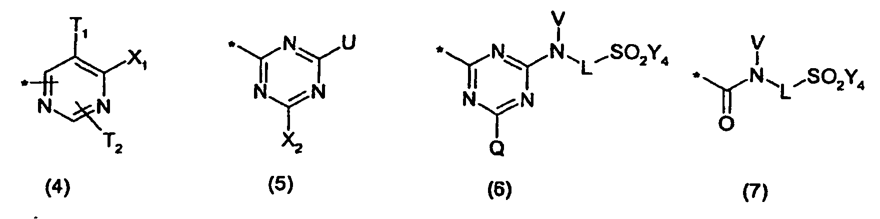
dans lesquelles
* représente la liaison avec N dans la formule (3),
Y₄ représente un vinyle ou un groupe de formule CH₂CH₂Z dans laquelle Z représente un groupe qui peut être éliminé par l'action d'un métal alcalin, par exemple un phosphate ou sulfate,
U représente un cycle hétérocyclique à 5 ou 6 chaînons liés par N, qui peut être substitué avec un groupe thio ou un groupe oxo, ou encore un groupe de formule générale (8) 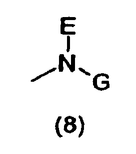
dans laquelle
E représente l'hydrogène, un alkyle en C₁ à C₄ éventuellement substitué avec un groupe méthoxy, hydroxy, sulfate, un sulfo ou le chlore, un phényle éventuellement substitué avec un ou deux substituants de la série du chlore, du nitro, de l'acétylamino, du sulfo, de l'hydroxy, du carboxy, des alcanoyles en C₁ à C₄, des alcoxys en C₁ à C₄ et des alkyles en C₁ à C₄,
G ayant l'une des significations de E ou étant un groupe cyano,
L représente un phénylène ou un naphtyle qui peut être substitué avec jusque deux substituants de la série du chlore, du brome, de l'hydroxy, un alcoxy en C₁ à C₄ et en particulier le méthoxy, un alkyle en C₁ à C₄ et en particulier le méthyle et l'éthyle, un sulfo ou un cyano, ou encore L est un alkylène en C₂ à C₆ qui peut être interrompu par un à deux groupes hétéro tels que par exemple l'oxo, le thio, l'amino ou un alkylamino en C₁ à C₄,
Q représente le fluor, le chlore, un alcoxy en C₁ à C₄, le cyanamido, l'amino, un alkylamino en C₁ à C₄, un dialkylamino, la pipérazine ou la morpholine ou un groupe de formule (9a) ou (9b) 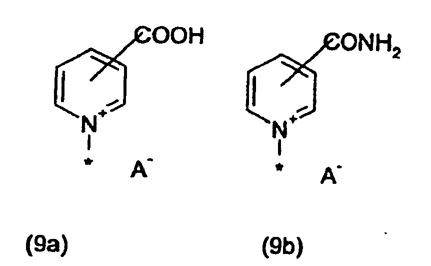
dans lesquelles
A⁻ représente le fluor, le chlore ou l'équivalent d'un ion sulfate,
V a l'une des significations de E,
T¹ représente l'hydrogène, le fluor ou le chlore,
T² représente l'hydrogène, le fluor ou le chlore, T¹ et
T² ne représentant pas tous deux l'hydrogène,
X¹ représente le fluor ou le chlore et
X² a la signification de X¹.

2. Mélanges de colorants qui contiennent des colorants de formule générale (1) et des colorants de formule générale (2) 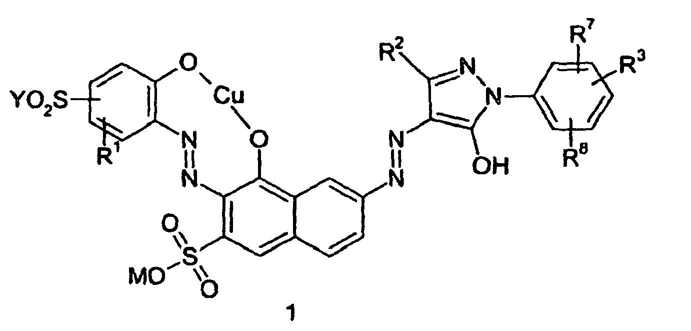 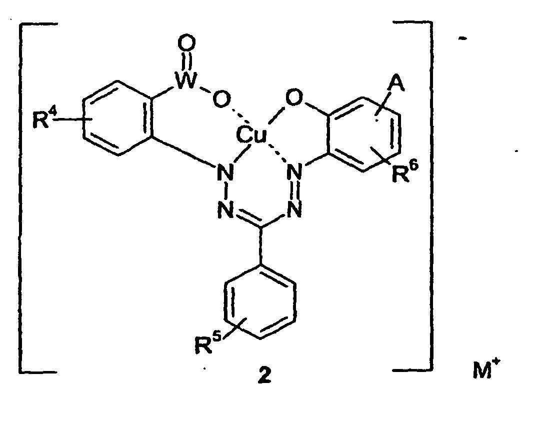
dans lesquelles
M représente l'hydrogène, un métal alcalin, un groupe ammonium ou un équivalent d'un ion de métal alcalinoterreux,
Y représente un vinyle ou un groupe de formule CH₂CH₂Z dans laquelle
Z représente un groupe qui peut être éliminé par l'action d'un métal alcalin, par exemple le chlore ou un groupe acétyle, phosphate ou thiosulfate,
R¹ représente l'hydrogène ou un alkyle en C₁ à C₄ tel que le méthyle, l'éthyle, le n-propyle, l'i-propyle, le n-butyle, l'i-butyle, le sec.-butyle, un alcoxy en C₁ à C₄ tel que le méthoxy, l'éthoxy, le propyloxy ou le butyloxy ainsi qu'un sulfo, le brome ou le chlore,
R² représente l'hydrogène ou un alkyle en C₁ à C₆ tel que le méthyle, l'éthyle, le n-propyle, l'i-propyle, le n-butyle, l'i-butyle, le sec.-butyle, le pentyle ou l'hexyle, un groupe carboxy ou carboxyalkyle, par exemple le carboxyméthyle ou le carboxyéthyle,
R³ représente l' hydrogène, un sulfo ou SO₂Y¹, Y¹ ayant la même signification que Y,
R⁴ représente l'hydrogène ou un sulfo,
R⁵ représente un sulfo, un méthyle, un carboxyle ou SO₂Y², Y² ayant la même signification que Y,
R⁶ a la même signification que R⁴,
R⁷ représente l'hydrogène, un alkyle, un sulfo ou le chlore,
R⁸ a la même signification que R⁷,
W représente un carbone ou -SO- et
A représente SO₂Y³, Y³ ayant la même signification que Y, ou encore A représente un groupe de formule générale (3) 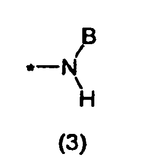
dans laquelle
* représente la liaison avec le formazan et
B représente un groupe de formule (4), (5), (6) ou (7), 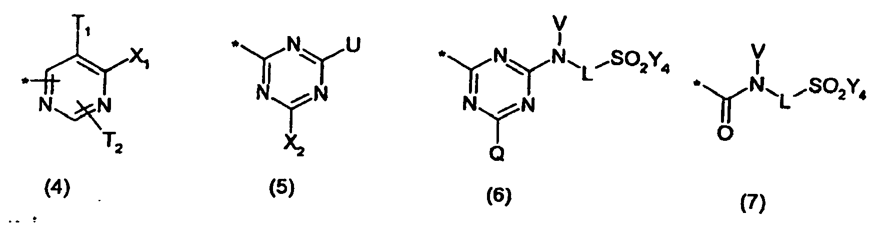
dans lesquelles
* représente la liaison avec N dans la formule (3),
Y₄ représente un vinyle ou un groupe de formule CH₂CH₂Z dans laquelle Z représente un groupe qui peut être éliminé par l'action d'un métal alcalin, par exemple un phosphate ou sulfate,
U représente un cycle hétérocyclique à 5 ou 6 chaînons liés par N, qui peut être substitué avec un groupe thio ou un groupe oxo, ou encore un groupe de formule générale (8) 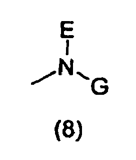
dans laquelle
E représente l'hydrogène, un alkyle en C₁ à C₄ éventuellement substitué avec un groupe méthoxy, hydroxy, sulfate, un sulfo ou le chlore, un phényle éventuellement substitué avec un ou deux substituants de la série du chlore, du nitro, de l'acétylamino, du sulfo, de l'hydroxy, du carboxy, des alcanoyles en C₁ à C₄, des alcoxys en C₁ à C₄ et des alkyles en C₁ à C₄,
G ayant l'une des significations de E ou étant un groupe cyano,
L représente un phénylène ou un naphtyle qui peut être substitué avec jusque deux substituants de la série du chlore, du brome, de l'hydroxy, un alcoxy en C₁ à C₄ et en particulier le méthoxy, un alkyle en C₁ à C₄ et en particulier le méthyle et l'éthyle, un sulfo ou un cyano, ou encore L est un alkylène en C₂ à C₆ qui peut être interrompu par un à deux groupes hétéro tels que par exemple l'oxo, le thio, l'amino ou un alkylamino en C₁ à C₄,
Q représente le fluor, le chlore, un alcoxy en C₁ à C₄, le cyanamido, l'amino, un alkylamino en C₁ à C₄, un dialkylamino, la pipérazine ou la morpholine ou un groupe de formule (9a) ou (9b) 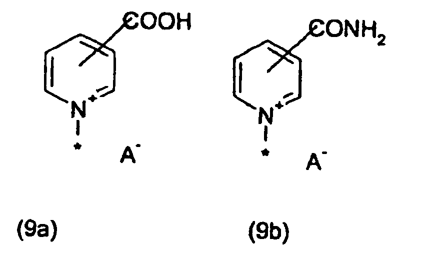
dans lesquelles
A⁻ représente le fluor, le chlore ou l'équivalent d'un ion sulfate,
V a l'une des significations de E,
T¹ représente l'hydrogène, le fluor ou le chlore,
T² représente l'hydrogène, le fluor ou le chlore, T¹ et
T² ne représentant pas tous deux l'hydrogène,
X¹ représente le fluor ou le chlore et
X² a la signification de X¹.

3. Mélange de colorants selon la revendication 1 ou 2, qui contient un ou plusieurs colorants azo qui correspondent à la formule générale (1) et un ou plusieurs colorants formazan qui correspondent à la formule générale (2) dans un rapport de mélange de 90:10% en poids à 10:90% en poids.

4. Mélange de colorants selon la revendication 1 ou 2, qui contient un ou plusieurs colorants azo qui correspondent à la formule générale (1) et un ou plusieurs colorants qui correspondent à la formule générale (2), dans un rapport de mélange de 70:30% en poids à 30:70% en poids.

5. Utilisation d'un mélange de colorants selon au moins l'une quelconque des revendications 1 à 4 pour colorer ou imprimer un matériau qui contient des groupes hydroxyle et/ou carbonamide, de préférence un matériau fibreux.

6. Procédé de préparation d'un mélange de colorants selon l'une quelconque ou plusieurs des revendications 1 à 4 par mélange mécanique dans les proportions nécessaires des colorants individuels de formule (1) et (2), qui se présentent sous forme solide ou sous forme liquide.

7. Procédé de coloration ou d'impression d'un matériau qui contient des groupes hydroxyle et/ou des groupes carbonamide, de préférence un matériau fibreux, dans lequel on applique sur le matériau un ou plusieurs colorants sous forme dissoute et on fixe le ou les colorants sur le matériau à l'aide de chaleur ou à l'aide d'un agent à action alcaline ou au moyen des deux dispositions, **caractérisé en ce que** comme colorants on utilise un mélange de colorants selon au moins l'une quelconque des revendications 1 à 4.
